Europäisches Patentamt

European Patent Office

Office européen des brevets

(11) Veröffentlichungsnummer: **0 308 832 B1**

(12) **EUROPÄISCHE PATENTSCHRIFT**

(45) Veröffentlichungstag der Patentschrift: **15.06.94**

(51) Int. Cl.5: **C08F 283/00**, C09J 151/08

(21) Anmeldenummer: **88115261.5**

(22) Anmeldetag: **17.09.88**

(54) **Pfropfpolymerisate mit Polyurethan-Pfropfgrundlage, Verfahren zu ihrer Herstellung und ihre Verwendung.**

(30) Priorität: **24.09.87 DE 3732089**

(43) Veröffentlichungstag der Anmeldung:
**29.03.89 Patentblatt 89/13**

(45) Bekanntmachung des Hinweises auf die
Patenterteilung:
**15.06.94 Patentblatt 94/24**

(84) Benannte Vertragsstaaten:
**AT BE CH DE ES FR GB LI**

(56) Entgegenhaltungen:
**EP-A- 0 286 019**
**US-A- 3 968 089**

**CHEMICAL ABSTRACTS, Band 102, 1985, Seite 51, Zusammenfassung Nr. 221842c,Columbus, Ohio, US; & JP-A-60 11 502 (TOA GOSEI CHEMICAL INDUSTRY CO.,LTD) 21-01-1985**

(73) Patentinhaber: **HOECHST AKTIENGESELL-SCHAFT**

**D-65926 Frankfurt(DE)**

(72) Erfinder: **Kroggel, Matthias, Dr.**
**In den Eichen 27**
**D-6237 Liederbach(DE)**
Erfinder: **Rauterkus, Karl Josef, Dr.**
**Im Hain 2**
**D-6233 Kelkheim (Taunus)(DE)**
Erfinder: **Seip, Detlev, Dr.**
**An den Römergärten 5**
**D-6233 Kelkheim (Taunus)(DE)**

EP 0 308 832 B1

**Beschreibung**

Die Erfindung betrifft Pfropfpolymerisate, bei denen Carbonsäurevinylester und gegebenenfalls weitere ethylenisch ungesättigte Monomere mittels radikalisch initiierter Pfropfpolymerisation auf Polyurethan-Pfropfgrundlagen polymer aufgepfropft sind, sowie Verseifungsprodukte der Pfropfpolymerisate, Verfahren zu ihrer Herstellung und ihre Verwendung. Gegenstand der Erfindung sind u.a. auch alle in den Patentansprüchen geoffenbarten und beanspruchten Gegenstände.

Bekanntlich finden Polyvinylcarbonsäureester, insbesondere Polyvinylacetate, und Polyvinylalkohole in vielfältiger Weise technische Anwendung.

So werden z.B. Polyvinylacetate als Klebstoffe verwendet, Polyvinylalkohole finden je nach Molekulargewicht, in Abhängigkeit vom Hydrolysegrad und gegebenenfalls einpolymerisierten Comonomeren, als Klebstoffe, Textilhilfsmittel oder als Folienrohstoff Verwendung.

Je nach Einsatzgebiet weisen die jeweils verwendeten Polyvinylalkohole häufig unzureichende Eigenschaften auf, die ihre Einsatzmöglichkeiten bzw. ihre Verwendbarkeit deutlich einschränken und teilweise verhindern.

So ist z.B. die Wasserlöslichkeit von Polyvinylalkoholen bei ihrer Verwendung als Schlichte häufig zu gering, bei Verwendung als Klebstoff häufig zu hoch.

Aufgrund der hohen Polyvinylalkoholschmelzpunkte lassen sich Extrusionsfolien nur nach vorheriger Weichmachung, beispielsweise mit niedermolekularen Polyolen, wie z.B. Glycerin, Diethylenglykol etc., häufig in Kombination mit Wasser, erhalten.

Ausschwitzen des Weichmachers führt in diesen Fällen zu langsamer Versprödung der Produkte, darüber hinaus sind extern weichgemachte Polymere für viele Anwendungen nicht einsetzbar. Alternativ hierzu ist die Herstellung von Gießfolien möglich, allerdings führt dieses Verfahren ebenfalls nur unter Einsatz externer Weichmacher der oben angegebenen Art zu brauchbaren Polyvinylalkohol-Folien.

Der vorliegenden Erfindung lag somit die Aufgabe zugrunde, die genannten Nachteile durch Herstellung modifizierter Polyvinylcarbonsäureester bzw. Polyvinylalkohole, die vorteilhaftere Eigenschaften besitzen, zu beseitigen.

Obwohl bereits auch modifizierte Polyvinylalkohole bekannt sind, die durch Aufpfropfen von Polyvinylacetat auf Polyalkylenoxid-Pfropfgrundlagen (Backbone) und nachfolgende Hydrolyse erhalten werden können (vgl. z.B. DE-PS 10 94 457, DE-PS 10 81 229, Europäische Patentanmeldung 0207003), so sind jedoch die Eigenschaften der dabei resultierenden Verbindungen unbefriedigend. Beispielsweise besitzen aus diesen Produkten hergestellte Folien weitgehend unzureichende Reißfestigkeiten.

Die japanische Anmeldung JP-60-11502 (Chem. Abstr. Bd 102, 1985, Nr. 22(842c) beschreibt Dispersionen, die durch Pfropfen von Mischungen aus Vinylchlorid und Vinylacetat auf eine Lösung eines Polyurethans in Vinylchlorid hergestellt werden. Bei den verwendeten Polyurethanen handelt es sich um Polyester-Urethane, deren Diolkomponenten von der Adipinsäure abgeleitete Polyester-Diole sind.

Die US-PS 3 968 089 beschreibt Präpolymere auf Polyether-Basis mit Isocyanat-Endgruppen. Diese Präpolymere sind spezielle Diisocyanate, die sich beispielsweise mit Polyetherpolyolen zu Schaumstoffen umsetzen lassen.

Die EP-A 0 286 019 beschreibt Pfropfpolymerisate erhältlich durch Pfropfen auf Polyester, Polyesteramide und Polyurethane. Das als Pfropfgrundlage u.a. verwendete Polyesterurethan wird hergestellt aus OH-Gruppen-terminierten Polyestern durch Umsetzen mit Diisocyanaten.

Die gestellte Aufgabe konnte nun überraschenderweise durch die Synthese von Pfropfpolymerisaten mit Polyurethan-Pfropfgrundlage (Backbone) gelöst werden, wobei die Pfropfpolymerisate auf die Pfropfgrundlage aufgepfropfte Polymerreste bzw. Polymerketten aus Vinylcarbonsäureestern und/oder deren Verseifungsprodukten und gegebenenfalls weiteren Monomereinheiten aus ethylenisch ungesättigten polymerisationsfähigen Verbindungen bzw. deren Verseifungsprodukten tragen und der prozentuale Anteil der aufgepfropften Komponenten 10 bis 99 Gew.-%, vorzugsweise 30 bis 90 Gew.-%, insbesondere 40 bis 80 Gew.-%, bezogen auf das Gesamtpfropfpolymerisat, beträgt.

Je nach Molekulargewicht und Aufbau der Polyurethan-Pfropfgrundlage, je nach Art, Zusammensetzung und Menge an aufgepfropften Monomeren, nach Molekulargewicht und nach Hydrolysegrad des Pfropfpolymerisats ergibt sich ein sehr breit gefächertes Eigenschaftsbild bei den erfindungsgemäßen Pfropfpolymerisaten.

Die Polyurethan-Pfropfgrundlagen bestehen aus Polyurethanen mit mindestens 2 Urethangruppen im Molekül, wobei die Anzahl der Urethangruppen pro Pfropfgrundlagenmolekül nach oben keiner besonderen Begrenzung unterliegt und im allgemeinen höhere Werte als 2 annehmen kann.

Die Polyurethan-Pfropfgrundlagen lassen sich nach üblichen Verfahren der Polyurethansynthese herstellen und werden bevorzugt unter Verwendung von Katalysatoren, wie z.B. tertiären Aminen oder

EP 0 308 832 B1

organischen Zinnverbindungen, bei Temperaturen zwischen 60 und 120°C, vorzugsweise zwischen 70 und 100°C, synthetisiert.

Sie sind aus Diol- und Diisocyanatkomponenten aufgebaut. Als Diolkomponente werden erfindungsgemäß aliphatische und/oder cycloaliphatische Diole oder Polyalkylenglykole oder Polyalkylenglykole in Kombination mit niedermolekularen aliphatischen Diolen eingesetzt. Bevorzugt sind cycloaliphatische Diole, wie z.B. Cyclohexandiole, sowie aliphatische Diole mit vorzugsweise 2 bis 12 C-Atomen. Bevorzugt sind ferner Polyalkylenglykole, wie z.B. Polypropylenoxide, Polybutylenoxide, Mischpolymere aus Ethylenoxid, Propylenoxid, Butylenoxid, vorzugsweise deren Blockcopolymere, besonders bevorzugt sind Polyethylenoxide.

Vorzugsweise werden Polyethylenglykole, d.s. $a,\omega$-Dihydroxypolyethylenoxide, mit Molekulargewichten zwischen 200 und 10 000 g/mol verwendet, wobei Polyethylenglykole mit Molekulargewichten zwischen 400 und 1500 g/mol besonders bevorzugt sind. Die Polyethylenglykole werden gegebenenfalls in Kombination mit niedermolekularen aliphatischen Diolen, wie z.B. 1,4-Butandiol, 1,3-Propandiol, Ethylenglykol bzw. Diethylenglykol, eingesetzt. Bevorzugt liegt ein molares Verhältnis von Polyethylenglykol zu niedermolekularem aliphatischem Diol von 1:0,1 bis 1:0,7 vor.

Als Diisocyanatkomponenten werden aromatische Diisocyanate, wie z.B. m- und p-Diisocyanatoxylol, 2,4-Diisocyanatotoluol, 2,6-Diisocyanatotoluol oder Gemische der beiden letzteren Isomeren, 1,5-Diisocyanatonaphthalin, 4,4'-Diisocyanatodiphenylmethan, 4,4'-Diisocyanatophenylbenzylether verwendet.

Bevorzugt werden aliphatische und/oder cycloaliphatische Diisocyanate eingesetzt. Bevorzugte aliphatische Diisocyanate sind z.B. solche mit 2 bis 12 C-Atomen im aliphatischen Rest, wie z.B. Ethylendiisocyanat, Propylendiisocyanat, Tetramethylendiisocyanat, 2,2,4-Trimethylhexamethylendiisocyanat.

Bevorzugte cycloaliphatische Diisocyanate sind z.B. 1,4-Diisocyanatocyclohexan, 4,4'-Methylen-bis-(cyclohexyldiisocyanat), 1-Methyl-2,4-cyclohexyldiisocyanat, 1-Methyl-2,6-cyclohexyldiisocyanat, 1,3-Bis-(isocyanatomethyl)-cyclohexan.

Besonders bevorzugt ist die Verwendung von 1,6-Hexamethylendiisocyanat und/oder Isophorondiisocyanat.

Die Molverhältnisse von Diol- zu Diisocyanatkomponenten liegen vorzugsweise zwischen 1:0,99 und 1:0,5, insbesondere zwischen 1:0,98 und 1:0,7. Die mittleren Molekulargewichte der Polyurethane liegen vorzugsweise zwischen 200 und 50000 g/mol, insbesondere zwischen 1000 und 35000 g/mol, besonders bevorzugt zwischen 3000 und 17000 g/mol. Die Ermittlung der mittleren Molekulargewichte (Gewichtsmittel) erfolgt in üblicher Weise. Zur Reglung des Molekulargwichtes bei der Herstellung der Polyurethane können Monohydroxyverbindungen, wie z.B. Methanol, Ethanol oder andere aliphatische Alkohole, insbesondere solche der allgemeinen Formel $C_nH_{2n+2}O$ mit n = 1 bis 4, verwendet werden, aber auch halbveresterte oder halbveretherte Diole bzw. Diolkomponenten. Darüber hinaus finden zur Molekulargewichtssteuerung Monoisocyanate Verwendung.

Es ist darauf hinzuweisen, daß z.B. bei vorgegebenem Molekulargewicht für die Pfropfgrundlage die Anzahl ihrer Urethangruppen direkt von den Molekulargewichten der verwendeten Diol- bzw. Diisocyanat-Komponenten abhängt.

Zur Pfropfung auf die Polyurethan-Pfropfgrundlagen werden Vinylcarbonsäureester mit 3 bis 20 C-Atomen eingesetzt. Besonders bevorzugt sind Vinylacetat und/oder Vinylpropionat, insbesondere Vinylacetat. Bevorzugt sind ferner Gemische aus Vinylacetat und/oder Vinylpropionat und Versaticsäurevinylester.

Bevorzugt wird Vinylacetat gepfropft. Insbesondere bei Teil- oder Vollverseifung der Pfropfpolymerisate im Anschluß an die Pfropfpolymerisation ist bei der Pfropfung neben Vinylacetat die Mitverwendung von Vinylpropionat vorteilhaft.

Außerdem lassen sich copolymerisierbare Gemische aus Vinylcarbonsäureestern pfropfen, vorzugsweise Gemische aus Vinylacetat und Versaticsäurevinylester, wobei der Versaticsäurevinylesteranteil 0,2 bis 10 Gew.-%, vorzugsweise 0,5 bis 5 Gew.-%, bezogen auf den Vinylacetatanteil, beträgt. Auch die Pfropfung mit verschiedenen Vinylcarbonsäureestern in Form von Blockcopolymeren, gegebenenfalls in Kombination mit weiteren ethylenisch ungesättigten und copolymerisationsfähigen Monomeren, kann vorteilhaft sein.

Weiterhin können die Vinylcarbonsäureester auch anderen ethylenisch ungesättigten und copolymerisierbaren Monomeren, wie z.B. Maleinsäure, Itaconsäure, Mesaconsäure, Crotonsäure, Acrylsäure oder deren Estern, gepfropft werden.

Die Pfropfung wird unter Verwendung von Radikalketten startenden Pfropfkatalysatoren durchgeführt, wobei hierfür vorzugsweise alle in den Monomeren, der Monomerenmischung bzw. der Monomerenlösung löslichen Radikalbildner in Betracht kommen. Insbesondere organische Per-Verbindungen, wie Peroxide und Percarbonate, sowie organische Azo-Verbindungen haben sich für die Pfropfung bewährt, bevorzugt wird Azo-bis-isobutyronitril und besonders bevorzugt Dibenzoylperoxid verwendet. Die Pfropfreaktion wird in Gegenwart von vorzugsweise 0,013 bis 1,3 mol-%, insbesondere 0,026 bis 0,27 mol-%, Radikale bildendem

3

Katalysator, bezogen auf die Monomerenmenge, durchgeführt.

Die erhaltenen Pfropfpolymerisate lassen sich durch Hydrolyse, Alkoholyse oder Umesterung in teil- oder vollverseifte Produkte überführen, wobei der Hydrolysegrad mindestens 1 mol-%, vorzugsweise 70 bis 99 mol-%, bezogen auf die Molzahl verseifbarer Monomereinheiten im Pfropfpolymerisat, beträgt.

Die Pfropfreaktion kann z.B. in Emulsion oder in Suspension erfolgen, bevorzugt wird sie aber in Lösung oder in Substanz durchgeführt.

Die zu pfropfenden Monomeren werden vorzugsweise der im Reaktionsgefäß vorgelegten Polyurethan-Pfropfgrundlage kontinuierlich oder diskontinuierlich zudosiert, wobei es vorteilhaft ist, die Dosiergeschwindigkeit und die Verfahrensparameter so zu wählen, daß die Bildung von Homopolymerisaten weitestgehend ausgeschlossen ist. Die Monomeren könnnen, soweit sie in flüssiger Form vorliegen, in Substanz oder auch als Lösung zugesetzt werden. Der Katalysator wird bevorzugt in der Monomerenflüssigkeit bzw. der Monomerenlösung gelöst und zusammen mit dieser zudosiert. Er kann aber auch im Reaktionsgefäß zusammen mit der Polyurethan-Pfropfgrundlage, zumindest teilweise, vorgelegt werden. Die Pfropfreaktion wird in Abhängigkeit vom eingesetzten Katalysator und, speziell bei Substanzpolymerisation, in Abhängigkeit von der eingesetzten Polyurethan-Pfropfgrundlage vorzugsweise bei Temperaturen zwischen 40 und 120°C, insbesondere zwischen 65 und 100°C, durchgeführt.

Alternativ ist auch Batch-Pfropfpolymerisation möglich, wobei dieses Verfahren häufig zu Gemischen aus Pfropfpolymerisaten und Homopolymerisaten der zu pfropfenden Monomeren führen kann.

Die bei der Pfropfpolymerisation auftretende Viskositätserhöhung des Reaktionsgemisches, insbesondere bei Substanzpolymerisation, führt häufig zu Verarbeitungsproblemen, die z.B. durch kontinuierlichen oder diskontinuierlichen Zusatz von Lösungsmitteln umgangen werden können. Als Lösungsmittel eignen sich vorzugsweise monofunktionelle Alkohole, insbesondere Methanol und Ethanol, die gegebenenfalls auch bereits für das Lösen der zu pfropfenden Monomeren eingesetzt werden können.

Bei Lösungspolymerisation sollte der Lösungsmittelanteil in dem Reaktionsgemisch unter 20 Gew.-%, vorzugsweise unter 10 Gew.-%, bezogen auf das Reaktionsgemisch, liegen.

Die erfindungsgemäß erhaltenen Pfropfpolymerisate lassen sich nach Entfernen der Restmonomeren (meist durch azeotrope Destillation mit Methanol) durch Eintragen der Mischung in Wasser in ihrer unverseiften Form ausfällen. Sie können aber auch nach Verdünnung mit einem Lösungsmittel, vorzugsweise mit Methanol, mittels saurer Katalysatoren (z.B. Salzsäure, Phosphorsäure, p-Toluolsulfonsäure etc.) oder aber vorzugsweise unter Verwendung alkalischer Katalysatoren (z.B NaOH, KOH, NaOCH$_3$, KOCH$_3$, etc.) gegebenenfalls unter Verwendung von Wasser nach üblichen literaturbekannten Verfahren in teil- bzw. vollverseifte Produkte übergeführt werden.

Bevorzugt beträgt der Alkalihydroxid-Zusatz 0,1 bis 20 mol-%, insbesondere 0,5 bis 10 mol-%, bezogen auf die aufgepfropfte und verseifbare Monomereinheitenmenge. Die Verseifung wird vorzugsweise zwischen 20 und 60°C durchgeführt, und zwar insbesondere durch alkalische Alkoholyse in niederem Alkanol, vorzugsweise in Methanol.

Enthalten die Pfropfpolymerisate neben den aufgepfropften Vinylestereinheiten noch weitere Comonomereinheiten aus ethylenisch ungesättigten Monomeren, die verseifbar sind, so können auch diese bei der Verseifungsreaktion bzw. Alkoholyse hydrolysiert werden.

Es hat sich ferner gezeigt, daß in den erfindungsgemäßen Pfropfpolymerisaten die Vinylestereinheiten mit vorzugsweise 1 bis 4 C-Atomen im Carbonsäurerest sich besonders gut alkalisch verseifen bzw. alkoholytisch spalten lassen, während Vinylestereinheiten mit längerkettigen Carbonsäureresten, vorzugsweise mit längerkettigen verzweigten Carbonsäureresten, gegen alkalische Verseifung bzw. alkalische Alkoholyse beständiger sind, was für die Herstellung einer Reihe von teilverseiften Pfropfpolymerisaten von Bedeutung ist.

Die erfindungsgemäß erhaltenen unverseiften Pfropfpolymerisate eignen sich zur Verwendung als Klebstoff, wobei insbesondere ihr Einsatz als Schmelzklebstoff von Interesse ist. Durch Variation der Polyurethan-Pfropfgrundlage, des Pfropfungsgrades und der Art der aufgepfropften Monomeren lassen sich Produkte mit stark differierenden Schmelzpunkten erhalten.

Darüber hinaus ist in Abhängigkeit von diesen Parametern die Blockungstendenz variierbar. Die Haftungstendenz dieser Verbindungen auf den verschiedensten Materialien ist ebenfalls von der Art der Polyurethan-Pfropfgrundlage, des Pfropfungsgrades und der Art der aufgepfropften Monomeren abhängig.

Erfindungsgemäße voll- und teilverseifte Pfropfpolymerisate eignen sich besonders für die Herstellung von Folien. Die Produkte besitzen, vergleichsweise zu nichtmodifizierten Polyvinylalkoholen, den Vorteil, daß sie in Abhängigkeit von der Polyurethan-Pfropfgrundlage, dem Pfropfungsgrad, dem Hydrolysegrad sowie in Abhängigkeit von der Art der gepfropften Monomeren deutlich abgesenkte Schmelzpunkte aufweisen, so daß Preß- und Extrusionsfolien unter milden Temperaturbedingungen hergestellt werden können. Außerdem sind in Abhängigkeit von den aufgeführten Parametern Folien mit differenzierter Wasserlöslichkeit, Reißfestigkeit, Dehnbarkeit und Gasbarriere, z.B. gegenüber Sauerstoff, erhältlich.

Aufgrund ihrer hohen Haftungstendenz auf Metallen lassen sich die Produkte vorteilhaft als Schmelzklebstoffe für die Verklebung von Metallen oder auch zur Beschichtung von Metallen einsetzen.

Die Erfindung wird durch die nachstehenden Beispiele näher erläutert.

**Beispiele 1 bis 7**

**Herstellung von Polyurethan-Pfropfgrundlagen**

In einem Reaktionsgefäß mit Rührwerk werden unter Stickstoffatmosphäre jeweils die Diolkomponente und der Katalysator vorgelegt und das Gemisch auf eine Reaktionstemperatur zwischen 65 und 100 °C erwärmt. Die Diisocyanatkomponente wird anschließend solchermaßen zudosiert, daß die Temperatur des Reaktionsgemisches 120 °C, vorzugsweise 100 °C, nicht überschreitet. Nach vollständiger Zudosierung der Diisocyanatkomponente wird zum möglichst vollständigen Umsatz der Reaktionskomponenten eine Nachreaktionszeit von einer Stunde bei 80 bis 100 °C unmittelbar angeschlossen.

Die Vollständigkeit des Umsatzes und damit das Ende der Reaktion lassen sich durch Analyse des Diisocyanatverbrauchs nach üblichen Methoden (z.B. IR-Spektroskopie, Titration) ermitteln.

Einzelheiten über die Zusammensetzung der Reaktionsgemische der Beispiele 1 bis 7 sowie das berechnete Molekulargewicht ($M_w$) der resultierenden Polyurethane (= Polyurethan-Pfropfgrundlagen) können der Tabelle 1 entnommen werden.

Wie aus der letzten Spalte in Tabelle 1 ersichtlich, liegen die für die erhaltenen Polyurethane (PU) berechneten Molekulargewichte ($M_w$) zwischen 3000 und 17000.

## TABELLE 1

### Polyurethan-Pfropfgrundlagen

| Beispiel Nr. | Molverhältnis der Diolkomponenten[1]-bestandteile | Reaktions-temperatur (°C) | Katalysator[3], Mol.-%, bez. auf Diisocyanat | Diisocyanat-komponente[2] | Molverhältnis von Diolkomponente: Diisocyanatkomponente | Berechnetes Mol.-Gew. des PU ($M_w$) |
|---|---|---|---|---|---|---|
| 1 | PEG 1500 : Bu 1 : 0,48 | 70 | 0,48 | HDI | 1 : 0,9 | 12 284 |
| 2 | PEG 600 : Bu 1 : 0,10 | 72 | 0,33 | IDI | 1 : 0,9 | 7 537 |
| 3 | PEG 600 : Bu 1 : 0,43 | 90 | 0,25 | IDI | 1 : 0,9 | 6 471 |
| 4 | PEG 600 : Bu 1 : 0,67 | 70 | 0,15 | IDI | 1 : 0,9 | 5 961 |
| 5 | PEG 600 : Bu 1 : 0,17 | 75 | 0,18 | IDI | 1 : 0,857 | 5 023 |
| 6 | PEG 1500 | 90 | 0,63 | HDI | 1 : 0,9 | 16 514 |
| 7 | PEG 1500 | 90 | 1,10 | HDI | 1 : 0,5 | 3 168 |

[1] PEG = Polyethylenglykol

Bu = 1,4-Butandiol

[2] HDI = 1,6-Hexamethylendiisocyanat

IDI = Isophorondiisocyanat

[3] Katalysator = 1,4-Dimethylpiperazin

EP 0 308 832 B1

EP 0 308 832 B1

**Beispiele 8 bis 21**

**Pfropfung in Substanz und in Lösung**

Die Polyurethan-Pfropfgrundlage (aus Beispielen 1 bis 7) wird jeweils in einem Reaktionsgefäß unter Stickstoffatmosphäre aufgeschmolzen bzw. unter Zusatz geringer Mengen Methanol gelöst und auf eine Temperatur von vorzugsweise 60 bis 100°C erwärmt. Die zu pfropfenden Monomeren werden, gegebenenfalls gelöst in Methanol, einschließlich des in den Monomeren gelösten radikalischen Katalysators so langsam zu der Polyurethan-Pfropfgrundlage dosiert, daß die Bildung von nicht-aufgepfropftem Homopolymerisat weitestgehend unterbleibt. Die Temperatur der Polymerisationsmasse sollte 120°C, vorzugsweise 100°C, nicht überschreiten. Die Zudosierzeit und die Nachraktionszeit sind abhängig von der Art der verwendeten Monomeren, von der Reaktionstemperatur, von der Art und Menge des verwendeten radikalischen Katalysators und von den zu pfropfenden Monomeren. Weiterhin ist auch die Ansatzgröße von Bedeutung, da mit größer werdenden Ansätzen die Reaktionswärme langsamer abgeführt wird, so daß gegebenenfalls die Gefahr besteht, daß die Innentemperatur der Reaktionsmasse auf zu hohe Werte ansteigt. Einzelheiten über die Zusammensetzung der Reaktionsgemische der Beispiele 8 bis 21 sowie der relevanten Reaktionsparameter sind in der Tabelle 2 zusammengefaßt wiedergegeben. Die in Spalten 7 und 8 der Tabelle 2 angegebenen Dosier- bzw. Nachreaktionszeiten beziehen sich, mit Ausnahme der Beispiele 8, 9 und 15, auf Ansatzgrößen mit 50 g Polyurethan-Pfropfgrundlage. Als Monomere werden in den Beispielen 10 bis 12 Gemische aus Vinylacetat + Versaticsäurevinylester, in den übrigen Beispielen nur Vinylacetat eingesetzt. In den Beispielen 17 und 18 wird zusätzlich das Lösungsmittel Methanol verwendet. Die in der vorletzten Spalte der Tabelle 2 angegebenen Grenzviskositätszahlen [η] wurden in Tetrahydrofuran (THF)-Lösung bei 25°C im Ostwaldviskosimeter ermittelt.

Abgestoppt wird die radikalische Polymerisationsreaktion durch Zusatz von Hydrochinon in methanolischer Lösung. Nicht umgesetzte Monomere werden sodann durch azeotrope Destillation mit Methanol entfernt. Die Isolierung des jeweils erhaltenen Pfropfpolymerisats erfolgt durch Eintragen der methanolischen Polymerisatlösung in Wasser oder durch Abdestillieren des Lösungsmittels. Die Pfropfpolymerisate lassen sich bei 50 bis 70°C gegebenenfalls unter Vakuum trocknen.

7

## Tabelle 2

### Pfropfpolymerisate

| Beisp. Nr. | PU[1] aus Beisp. Nr. | Zudos. Vinylacetat in g/g PU | Katalysator, Mol.-%, bez. auf Monomere | | Temp. bei Polymerisationsstart °C | Monomerdosierzeit in Min. | Nachreaktionszeit in Min. | Gepfropfte Monomermenge Gew.-% | $[\eta]$ THF 25°C | Berechnetes durchschnittl. Mol.-Gewicht $M_w$ in g/mol |
|---|---|---|---|---|---|---|---|---|---|---|
| 8[2] | 1 | 2,32 | BSO[8] | 0,2 | 75 | 190 | 45 | 68,4 | 38,6 | 38 912 |
| 9[2] | 1 | 3 | BSO | 0,2 | 77 | 200 | 45 | 74 | 41,9 | 47 237 |
| 10 | 2 | 1,47[3] | BSO | 0,2 | 72 | 75 | 120 | 57,2 | 30,1 | 17 612 |
| 11 | 2 | 3,92[3] | BSO | 0,2 | 74 | 255 | 120 | 78,6 | 25,8 | 35 153 |
| 12 | 2 | 1,44[4] | BSO | 0,2 | 74 | 120 | 120 | 58,5 | 23,1 | 18 143 |
| 13 | 3 | 2,32 | BSO | 0,2 | 65 | 220 | 45 | 68,8 | 16,6 | 19 613 |
| 14 | 3 | 4,0 | BSO | 0,2 | 68 | 330 | 45 | 79,0 | 23,8 | 28 889 |
| 15[7] | 3 | 3,5 | BSO | 0,2 | 68 | 450 | 45 | 77,2 | 19,6 | 26 375 |
| 16 | 4 | 4,0 | BSO | 0,2 | 70 | 330 | 45 | 79,4 | 29,3 | 26 540 |
| 17[5] | 5 | 2,32 | AIBN[9] | 0,271 | 56 | 150 | 45 | 62,4 | 19,7 | 13 369 |
| 18[5] | 5 | 2,32[6] | AIBN | 0,271 | 62 | 180 | 45 | 64,1 | 22,0 | 13 975 |
| 19 | 5 | 2,32 | AIBN | 0,027 | 64 | 150 | 45 | 64,2 | 29,1 | 14 015 |
| 20 | 6 | 4,0 | BSO | 0,266 | 77 | 210 | 90 | 80,0 | 25,6 | 83 258 |
| 21 | 7 | 1,5 | BSO | 0,266 | 70 | 70 | 120 | 58,5 | 14,9 | 7 619 |

1) PU= Polyurethan-Pfropfgrundlage;
2) bezogen auf 75 g PU;
3) + 2 Gew.-% Versaticsäurevinylester, bezogen auf Vinylacetat;
4) + 4 Gew.-% Versaticsäurevinylester, bezogen auf Vinylacetat;

5) PU wurde mit 0,1 g Methanol pro g PU vorgelegt,
6) + 0,3 g Methanol pro g PU;
7) bezogen auf 1710 g PU;
8) BSO= Dibenzoylperoxid;
9) AIBN= Azo-bis-isobutyronitril

EP 0 308 832 B1

**Beispiele 22 bis 35**

**Synthese von teil- und vollverseiften Propfpolymerisaten**

Propfpolymerisate aus Beispielen 8 bis 21 werden zur Teil- bzw. Vollverseifung in Methanol gelöst und mit methanolischer Natronlauge (5 bis 25 gew.-%ig) versetzt. Es werden je nach Alkalimenge und Reaktionszeit in Abhängigkeit von der Reaktionstemperatur und dem Pfropfungsgrad des Pfropfpolymerisates polymere Hydrolyseprodukte mit unterschiedlichem Hydrolysegrad erhalten. Teilverseifungen werden vorzugsweise unter Zusatz von Wasser zu der methanolischen Verseifungslösung durchgeführt (vgl. Beispiel 29).

Zweckmäßig ist es, die zu verseifenden Pfropfpolymerisate in methanolischer Lösung in einer solchen Konzentration vorzulegen, daß bei der Verseifung ein Gel entsteht, was vorzugsweise bei Hydrolysegraden von über 80 % unschwer möglich ist. Derartige Gele lassen sich dann mittels üblicher Mühlen granulieren, das Granulat mit Methanol waschen und z.B. über einen sog. Büchner-Trichter absaugen. Produkte, die nicht in Gelform anfallen, können nach Abdestillieren des Lösungsmittels oder durch Eintragen in Wasser isoliert werden. Bisweilen kann auch Fällung der Produkte mit organischen Lösungsmitteln, wie z.B. Essigsäureethylester oder Aceton, zum Erfolg führen. Die Verseifungsreaktionen werden nach beendeter Reaktionszeit durch Zusatz von Carbonsäuren, vorzugsweise einer zur eingesetzten Natronlauge äquivalenten Menge Essigsäure, abgestoppt.

Die Trocknung der Verseifungsprodukte erfolgt bei Temperaturen bis zu 70°C, vorteilhafterweise unter Vakuum.

Einzelheiten über die Ausgangskomponenten und die Reaktionsbedingungen sowie über Eigenschaftsparameter der Verseifungsprodukte sind für die Beispiele 22 bis 35 in der Tabelle 3 zusammengefaßt wiedergegeben.

Tabelle 3

Verseifungsprodukte von Pfropfpolymerisaten

| Beispiel Nr. | 35 gew.-%ige methanolische Pfropfpolymerisatlösung aus Beisp. Nr. | Zugesetzte Menge NaOH in Mol-%, bez. auf gepfropfte Estereinheiten | Gelbildg. der Verseifungsmischung 3) nach Minuten | Verseifungsreaktionszeit in Minuten | Hydrolysegrad in %, bez. auf Vinylestereinheiten | Gew.% Vinylalkoholeinheiten, berechnet |
|---|---|---|---|---|---|---|
| 22 | 8 | 5 | 7 | 45 | 98,8 | 52,0 |
| 23 | 9 | 5 | 6 | 45 | 98,6 | 53,5 |
| 24 | 10 | 5 | 15 | 45 | 97,6 | 50,5 |
| 25 | 11 | 5 | 10 | 45 | 98,5 | 63,6 |
| 26 | 12 | 5 | 19 | 45 | 97,4 | 40,5 |
| 27 | 13 | 5 | 12 | 45 | 96,3 | 49,1 |
| 28 | 14 | 5 | 8,5 | 45 | 97,2 | 62,1 |
| 29²) | 15 | 1,5¹) | 42 | 75 | 78,4 | 47,9 |
| 30 | 16 | 5 | 8,5 | 45 | 97,1 | 62,5 |
| 31 | 17 | 5 | 11,5 | 45 | 97,9 | 45,0 |
| 32 | 18 | 5 | 8,5 | 45 | 98,4 | 46,9 |
| 33 | 19 | 5 | 8,5 | 45 | 98,2 | 46,9 |
| 34 | 20 | 5 | 6 | 45 | 99,0 | 66,7 |
| 35 | 21 | 5 | 5 | 45 | 99,2 | 41,5 |

1) + 33,5 Mol-% Wasser, bezogen auf gepfropfte Estereinheiten
2) Verseifung aus 55-%iger methanolischer Lösung
3) Die Verseifungsreaktion wird jeweils bei 20 bis 25°C durchgeführt.

Es wurden ferner in den Beispielen 36 bis 40 an erfindungsgemäß verseiften Pfropfpolymerisaten, die auch als gepfropfte Polyvinylalkohole bezeichnet werden können, DSC-Messungen ausgeführt (DSC = Differential Scanning Calorimetry) und die erhaltenen Werte analogen Vergleichswerten gegenübergestellt, wie sie an handelsüblichen Polyvinylalkoholen (PVAL) mit Verseifungsgraden von ca. 98%, deren Folien u.a. hohe Reißfestigkeiten zeigen, in den Vergleichsbeispielen 1 bis 4 erhalten worden sind. Als handelsübliche Polyvinylalkohole wurden die Mowiol-Typen 4-98, 10-98, 20-98 und 28-98 der Fa. Hoechst AG verwendet. Diese Polyvinylalkohole besitzen zwar untereinander praktisch gleiche Hydrolysegrade (ca. 98%), sie unterscheiden sich u.a. aber hinsichtlich ihrer Viskositätszahlen und damit in ihren Molekulargewichten, wobei die 4 Produkte jeweils in 4-%iger wäßriger Lösung bei 20°C in der obengenannten Reihenfolge die Viskositätszahlen 4, 10, 20 und 28 mPa•s aufweisen, gemessen nach DIN 53 015.

In der Tabelle 4 sind die Hydrolysegrade (in %, bezogen auf die hydrolysierbaren Monomereinheiten im unverseiften Ausgangspfropfpolymerisat), die Schmelzpunkte (Fp., °C), die Kristallisationstemperaturen beim Abkühlen ($T_{krist}$ in °C) und die Schmelzenthalpien ($\Delta H$ in Joule/g) der Beispiele 36 bis 40 sowie die analogen Werte der Vergleichsbeispiele 1 bis 4 zusammengefaßt wiedergegeben.

Wie die $\Delta H$-Werte in der letzten Spalte der Tabelle 4 zeigen, besitzen die Polyvinylalkohole der Vergleichsbeispiele 1 bis 4 wesentlich höhere kristalline Anteile als die erfindungsgemäßen hydrolysierten Pfropfpolymerisate der Beispiele 36 bis 40, da die $\Delta H$-Werte der ersteren deutlich höher liegen als die $\Delta H$-Werte der letzteren. Ferner liegen die Schmelzpunkte (Fp., °C) der erfindungsgemäßen hydrolysierten Pfropfpolymerisate in den Beispielen 36 bis 40 deutlich niedriger als die Schmelzpunkte in den Vergleichsbeispielen 1 bis 4. Die geringere Kristallinität und die niedrigeren Schmelzpunkte bei den erfindungsgemäßen hydrolysierten Pfropfpolymerisaten führen zu überraschenden Eigenschaften, die sich äußerst vorteilhaft u.a. bei der thermoplastischen Verarbeitung der Produkte auswirken. So ist bei der thermoplastischen Verarbeitung von erfindungsgemäßen hydrolysierten Pfropfpolymerisaten gegebenenfalls lediglich Wasser als Weichmacher erforderlich, nicht aber organische Weichmacher, wie z.B. Glycerin bzw. andere Polyole, im Gegensatz zu handelsüblichem Polyvinylalkohol, der ohne organische Weichmacher üblicherweise nicht thermoplastisch verarbeitbar ist. Ihr diesbezüglich vorteilhaftes Verhalten eröffnet den erfindungsgemäßen gepfropften Polyvinylalkoholen somit ein bisher nicht erreichbares breites Anwendungsfeld.

Tabelle 4

| Schmelzpunkt (Fp.), Schmelzenthalpie ($\Delta H$) und Kristallisationstemperatur beim Abkühlen ($T_{krist.}$) von Polyvinylalkoholen (PVAL) und von verseiften Pfropfpolymerisaten | | | | | |
|---|---|---|---|---|---|
| Vergl.-beisp. Nr. | PVAL, Mowiol-Type | Hydrolysegrad % | Fp. °C | $T_{krist.}$ °C | $\Delta H$ J/g |
| 1 | 4-98 | 97,8 | 226 | 191 | 57,7 |
| 2 | 10-98 | 98,2 | 228 | 190 | 58,6 |
| 3 | 20-98 | 98,2 | 225 | 190 | 62,0 |
| 4 | 28-98 | 97,6 | 234 | 192 | 76,0 |
| Beisp. Nr. | Verseiftes Propfpolymerisat aus Beisp. Nr. | | | | |
| 36 | 22 | 98,8 | 206 | 188 | 22,5 |
| 37 | 24 | 97,6 | 197 | 177 | 15,5 |
| 38 | 25 | 98,5 | 207 | 189 | 27,0 |
| 39 | 27 | 96,3 | 200 | 183 | 11,5 |
| 40 | 33 | 98,2 | 205 | 190 | 20,0 |

**Beispiele 41 und 42**

**Schmelzklebstoffe**

Es wurden in den Beispielen 41 und 42 jeweils nicht verseifte Pfropfpolymerisate aus den Beispielen 8 und 9 bei 120 bis 130°C aufgeschmolzen und die Schmelzen mittels einer Rakel zu 100 $\mu$m starken filmen auf Polyesterfolie (PE-Folie) aufgezogen. Die solchermaßen mit Schmelzklebstoff beschichteten PE-Folien wurden anschließend auf den mit dem Schmelzklebstoff-Film beschichteten Seiten bei 120°C ohne Anwendung von Druck mit Stahlblech verklebt.

Es wurde sodann an den verklebten Flächen die Klebkraft der Schmelzklebstoffe ermittelt. Dazu wurden PE-Folie und Stahlblech auf einer Breite von 2,5 cm zu Verbundprüfkörpern verklebt und die Klebkraft (in N/cm) durch Abziehen der PE-Folie mit einer Abzugsgeschwindigkeit von 30 cm/Minute bei 20°C ermittelt.

Die Ergebnisse sind in der Tabelle 5 zusammengefaßt wiedergegeben.

Es wurden in den Beispielen 41 und 42 ferner die Scherfestigkeit an mit nicht verseiften Pfropfpolymerisaten aus den Beispielen 8 und 9 verklebten PE-Folie-Stahlblech-Verbunden ermittelt, wobei die Verklebungen wie vorstehend bei der Herstellung der Prüfkörper für die Klebkraft-Ermittlung beschrieben hergestellt wurden. Zur Bestimmung der Scherfestigkeit wurden verklebte PE-Folie-Stahlblech-Prüfkörper mit einer Verklebungsfläche der Größe (1,5•1,5)cm² verwendet und die beiden verklebten Verbundschichten bei 20°C parallel zur Verklebungsebene mit 1 kg belastet und die Zeit (in Stunden) bis zur Trennung der beiden Verbundschichten als Maß für die Scherfestigkeit des Schmelzklebstoffs ermittelt. Die Ergebnisse sind ebenfalls in der Tabelle 5 zusammengefaßt wiedergegeben.

Die Meßzahlen in Tabelle 5 zeigen, daß die erfindungsgemäßen Pfropfpolymerisate bei Verwendung als Schmelzklebstoff sowohl eine gute Klebkraft als auch eine gute Scherfestigkeit besitzen.

## Tabelle 5

## Pfropfpolymerisate als Schmelzklebstoffe

| Beispiel Nr. | Schmelz- klebstoff aus Beisp. Nr. | Klebkraft des Schmelzklebstoffs bei 20°C, in N/cm | Scherfestigkeit des Schmelzklebstoffs bei 20°C in Stdn. bei 1 kg Belastung |
|---|---|---|---|
| 41 | 8 | 14,0 | 9,5 |
| 42 | 9 | 13,6 | 10,5 |

**Beispiele 43 bis 49**

Es wurden in den Beispielen 43 bis 49 an Folien aus erfindungsgemäßen verseiften Pfropfpolymerisaten die Reißfestigkeit (N/mm²), die Dehnung (%) sowie die Sauerstoffdurchlässigkeit (ml $O_2/m^2$•Tag•bar) bei verschiedenen relativen Luftfeuchten ermittelt. Dazu wurden aus den zu prüfenden verseiften Pfropfpolymerisat-Pulvern ca. 200 μm dicke Preßfolien gefertigt (hergestellt bei 200°C und einem Druck von 7,5 kg/cm²). Die erhaltenen Folien wurden zunächst durch 3-tägige Lagerung bei 50 % rel. Luftfeuchte und 23°C konditioniert.

Die Reißfestigkeit und die Dehnung wurden mittels eines Instron-Gerätes bei 23°C und 50 % rel. Luftfeuchte ermittelt.

Die $O_2$-Durchlässigkeiten wurden mittels eines Oxtran 100 - Gerätes bei verschiedenen Luftfeuchtigkeiten, und zwar bei 0, 53 und 93 % rel. Luftfeuchte, gemessen.

Die verwendeten Folienmaterialien und die Ergebnisse der Messungen sind in der Tabelle 6 zusammengefaßt wiedergegeben.

Wie den beiden letzten Spalten der Tabelle 6 entnommen werden kann, steigen die $O_2$-Durchlässigkeiten mit zunehmender rel. Luftfeuchte an. Die vorteilhaften Reißfestigkeits- und die Dehnungswerte aus Tabelle 6 ermöglichen den erfindungsgemäßen verseiften Pfropfpolymerisaten zusammen mit deren übrigen vorteilhaften Eigenschaften ein breites Verwendungsspektrum.

**Tabelle 6**

**Folien aus verseiften Pfropfpolymerisaten**

| Beisp. Nr. | Folie aus verseiftem Pfropfpoly- merisat aus Beisp. Nr. | Reißfestig- keit $N/mm^2$ | Dehnung % | $O_2$-Durch- lässigkeit $ml/m^2 \cdot Tag \cdot bar$ | Rel. Luft- feuchte % |
|---|---|---|---|---|---|
| 43 | 22 | 10,7 | 240 | | |
| 44 | 23 | 13,5 | 224 | | |
| 45 | 24 | 12,2 | 237 | | |
| 46 | 25 | 20,7 | 103 | | |
| 47 | 26 | 5,5 | 297 | | |
| 48 | 27 | 13,8 | 202 | 46,3 | 0 |
| | | | | 49,9 | 53 |
| | | | | 118,0 | 93 |
| 49 | 30 | 9,1 | 331 | 12,9 | 0 |
| | | | | 13,2 | 53 |
| | | | | 65,0 | 93 |

**Patentansprüche**

**Patentansprüche für folgende Vertragsstaaten : AT, BE, CH, DE, FR, GB, LI**

1. Pfropfpolymerisate mit Polyurethan-Pfropfgrundlage, wobei die Pfropfgrundlage mindestens 2 Urethangruppen im Molekül und Einheiten aus Diisocyanaten und gegebenenfalls geringen Mengen monofunktionellen Isocyanaten sowie Einheiten aus aliphatischen und/oder cycloaliphatischen Diolen oder Polyalkylenglykolen oder Polyalkylenglykolen in Kombination mit niedermolekularen aliphatischen Diolen und gegebenenfalls geringen Mengen Monohydroxyverbindungen enthält, dadurch gekennzeichnet, daß auf die Polyurethan-Pfropfgrundlage Polymerreste aus Einheiten von Carbonsäurevinylestern mit 3 bis 20 C-Atomen und/oder deren Verseifungsprodukten und gegebenenfalls von weiteren ethylenisch ungesättigten und gegebenenfalls copolymerisierten Monomeren und/oder gegebenenfalls deren Verseifungsprodukten aufgepfropft sind.

2. Pfropfpolymerisate nach Anspruch 1, dadurch gekennzeichnet, daß die Polyurethan-Pfropfgrundlage ein Molekulargewicht zwischen 200 und 50 000 g/mol besitzt.

3. Pfropfpolymerisate nach Anspruch 1 und/oder 2, dadurch gekennzeichnet, daß die Polyurethan-Pfropfgrundlage Einheiten aus aromatischen und/oder aliphatischen und/oder cycloaliphatischen Diisocyanaten, vorzugsweise Hexamethylendiisocyanat- und/oder Isophorondiisocyanateinheiten, enthält.

4. Pfropfpolymerisate nach einem oder mehreren der Ansprüche 1 bis 3, dadurch gekennzeichnet, daß die Polyurethan-Pfropfgrundlage in der Diolkomponente Einheiten aus Alkylenglykol und/oder Polyalkylenglykol, vorzugsweise Polyethylenglykol mit einem Molekulargewicht zwischen 200 und 10 000 g/mol, oder Gemische aus diesen Einheiten enthält.

5. Pfropfpolymerisate nach einem oder mehreren der Ansprüche 1 bis 4, dadurch gekennzeichnet, daß die Polyurethan-Pfropfgrundlage in der Diolkomponente ausschließlich oder teilweise Einheiten aus niedermolekularen Diolen, vorzugsweise aus der Gruppe Butandiole, Propandiole, Ethylenglykol, Diethylenglykol, Triethylenglykol oder Ethylenpropylenglykole, enthält.

13

**6.** Pfropfpolymerisate nach einem oder mehreren der Ansprüche 1 bis 5, dadurch gekennzeichnet, daß die Polyurethan-Pfropfgrundlage als Endgruppen niedere Alkoxyreste und/oder Hydroxylgruppen enthält.

**7.** Pfropfpolymerisate nach einem oder mehreren der Ansprüche 1 bis 6, dadurch gekennzeichnet, daß endständige OH-Gruppen der Polyurethan-Pfropfgrundlage durch angelagerte Monoisocyanate maskiert oder blockiert sind.

**8.** Pfropfpolymerisate nach einem oder mehreren der Ansprüche 1 bis 7, dadurch gekennzeichnet, daß auf die Polyurethan-Pfropfgrundlage Polymerreste aus Vinylpropionat und/oder Vinylacetat, vorzugsweise Vinylacetat, in Mengen von 10 bis 99 Gew.-%, bezogen auf das Pfropfpolymerisat, und/oder deren Verseifungsprodukten aufgepfropft sind.

**9.** Pfropfpolymerisate nach einem oder mehreren der Ansprüche 1 bis 8, dadurch gekennzeichnet, daß auf die Polyurethan-Pfropfgrundlage Polymerreste aus Vinylacetat und/oder Vinylpropionat und Versaticsäurevinylester und/oder deren Verseifungsprodukten aufgepfropft sind.

**10.** Pfropfpolymerisate nach einem oder mehreren der Ansprüche 1 bis 9, dadurch gekennzeichnet, daß auf die Polyurethan-Pfropfgrundlage Polymerreste aus Vinylestern und weiteren mit den Vinylestern gegebenenfalls copolymerisierten ethylenisch ungesättigten Monomeren und/oder deren Verseifungsprodukten aufgepfropft sind.

**11.** Pfropfpolymerisate nach einem oder mehreren der Ansprüche 1 bis 10, dadurch gekennzeichnet, daß die in den auf die Polyurethan-Pfropfgrundlage aufgepfropften Polymerresten enthaltenen Vinylestereinheiten und gegebenenfalls weiteren aufgepfropften und verseifbaren ethylenisch ungesättigten Monomereinheiten teilweise oder vollständig verseift sind.

**12.** Verfahren zur Herstellung von Pfropfpolymerisaten nach einem oder mehreren der Ansprüche 1 bis 11 durch radikalisch initiierte Pfropfpolymerisation von ethylenisch ungesättigten polymerisationsfähigen Monomeren in Lösung oder in Substanz oder gegebenenfalls in Emulsion oder Suspension auf eine Pfropfgrundlage und gegebenenfalls anschließende Verseifung von hydrolysierbaren Monomereinheiten in den aufgepfropften Polymerresten, dadurch gekennzeichnet, daß als Pfropfgrundlage Polyurethane nach einem odere mehreren der Ansprüche 1 bis 7 verwendet und als aufzupfropfende Monomere Carbonsäurevinylester mit 3 bis 20 C-Atomen und gegebenenfalls weitere ethylenisch ungesättigte polymerisationsfähige Monomere, die gegebenenfalls copolymerisationsfähig sind, in Mengen von 10 bis 99 Gew.-%, bezogen auf das Pfropfpolymerisat, eingesetzt werden, wobei die Monomeren unter Mischen mit der Pfropfgrundlage und Zusatz radikalischer Initiatoren radikalisch polymerisiert und gegebnenefalls anschließend in den aufgepfropften Polymerresten der resultierenden Pfropfpolymerisate die Vinylestereinheiten und gegebenenfalls weitere verseifbare Monomereinheiten teilweise oder vollständig durch Hydrolyse und/oder Alkoholyse verseift und die erhaltenen Pfropfpolymerisate isoliert werden.

**13.** Verfahren nach Anspruch 12, dadurch gekennzeichnet, daß als aufzupfropfende Vinylestermonomere Vinylacetat und/oder Vinylpropionat und gegebenenfalls Versaticsäurevinylester verwendet werden.

**14.** Verfahren nach Anspruch 12 und/oder 13, dadurch gekennzeichnet, daß die zu pfropfenden Monomeren im Gemisch mit der Pfropfgrundlage oder unter Zudosierung in die vorgelegte Pfropfgrundlage der Polymerisaation zugeführt werden.

**15.** Verfahren nach einem oder mehreren der Ansprüche 12 bis 14, dadurch gekennzeichnet, daß die Pfropfpolymerisation in alkoholischer Lösung durchgeführt wird.

**16.** Verfahren nach einem oder mehreren der Ansprüche 12 bis 15, dadurch gekennzeichnet, daß die teilweise oder vollständige Verseifung der Vinylestereinheiten in den aufgepfropften Polymerresten unter Zusatz von niederen Alkoholen, gegebenenfalls in Mischung mit Wasser, und alkalischer oder gegebenenfalls saurer Katalyse bei Temperaturen unterhalb von 160°C erfolgt.

**17.** Verwendung von nicht verseiften Pfropfpolymerisaten nach einem oder mehreren der Ansprüche 1 bis 11 als Schmelzklebstoff oder in Verbindung mit Lösungsmitteln als lösungsmittelhaltige Klebstoffe für die Verklebung diverser Materialien wie Metalle, keramische Materialien, Kunststoffe, Fasern, Folien, Textilien, Papier, Holz, ferner zur Herstellung von Folien durch thermoplastische Verformung oder zur Herstellung von Beschichtungen.

**18.** Verwendung verseifter und/oder teilverseifter Pfropfpolymerisate nach einem oder mehreren der Ansprüche 1 bis 11 als Klebstoff sowie als Ausgangsmaterial für Gieß-, Preß- oder Extrusionsfolien.

**Patentansprüche für folgenden Vertragsstaat : ES**

**1.** Verfahren zur Herstellung von Pfropfpolymerisaten mit Polyurethan-Pfropfgrundlage, wobei die Pfropfgrundlage mindestens 2 Urethangruppen im Molekül und Einheiten aus Diisocyanaten und gegebenenfalls geringen Mengen monofunktionellen Isocyanaten sowie Einheiten aus aliphatischen und/oder cycloaliphatischen Diolen oder Polyalkylenglykolen oder Poylalkylenglykolen in Kombination mit niedermolekularen aliphatischen Diolen und gegebenenfalls geringen Mengen Monohydroxyverbindungen enthält, und auf die Polyurethan-Pfropfgrundlage Polymerreste aus Einheiten von Carbonsäurevinylestern mit 3 bis 20 C-Atomen und/oder deren Verseifungsprodukten und gegebenenfalls von weiteren ethylenisch ungesättigten und gegebenenfalls copolymerisierten Monomeren und/oder gegebenenfalls deren Verseifungsprodukten aufgepfropft sind, durch radikalisch initiierte Pfropfpolymerisation von ethylenisch ungesättigten polymerisationsfähigen Monomeren in Lösung oder in Substanz oder gegebenenfalls in Emulsion oder Suspension auf eine Pfropfgrundlage und gegebenenfalls anschließende Verseifung von hydrolysierbaren Monomereinheiten in den aufgepfropften Polymerresten, dadurch gekennzeichnet, daß als Pfropfgrundlage eine Polyurethan-Pfropfgrundlage verwendet wird und als aufzupfropfende Monomere Carbonsäurevinylester mit 3 bis 20 C-Atomen und gegebenenfalls weitere ethylenisch ungesättigte polymerisationsfähige Monomere, die gegebenenfalls copolymerisationsfähig sind, in Mengen von 10 bis 99 Gew.-%, bezogen auf das Pfropfpolymerisat, eingesetzt werden, wobei die Monomeren unter Mischen mit der Pfropfgrundlage und Zusatz radikalischer Initiatoren radikalisch polymerisiert und gegebenenfalls anschließend in den aufgepfropften Polymerresten der resultierenden Pfropfpolymerisate die Vinylestereinheiten und gegebenenfalls weitere verseifbare Monomereinheiten teilweise oder vollständig durch Hydrolyse und/oder Alkoholyse verseift und die erhaltenen Pfropfpolymerisate isoliert werden.

**2.** Verfahren nach Anspruch 1, dadurch gekennzeichnet, daß die Polyurethan-Pfropfgrundlage ein Molekulargewicht zwischen 200 und 50 000 g/mol besitzt.

**3.** Verfahren nach Anspruch 1 und/oder 2, dadurch gekennzeichnet, daß die Polyurethan-Pfropfgrundlage Einheiten aus aromatischen und/oder aliphatischen und/oder cycloaliphatischen Diisocyanaten, vorzugsweise Hexamethylendiisocyanat- und/oder Isophorondiisocyanateinheiten, enthält.

**4.** Verfahren nach einem oder mehreren der Ansprüche 1 bis 3, dadurch gekennzeichnet, daß die Polyurethan-Pfropfgrundlage in der Diolkomponente Einheiten aus Alkylenglykol und/oder Polyalkylenglykol, vorzugsweise Polyethylenglykol mit einem Molekulargewicht zwischen 200 und 10 000 g/mol, oder Gemische aus diesen Einheiten enthält.

**5.** Verfahren nach einem oder mehreren der Ansprüche 1 bis 4, dadurch gekennzeichnet, daß die Polyurethan-Pfropfgrundlage in der Diolkomponente ausschließlich oder teilweise Einheiten aus niedermolekularen Diolen, vorzugsweise aus der Gruppe Butandiole, Propandiole, Ethylenglykol, Diethylenglykol, Triethylenglykol oder Ethylenpropylenglykole, enthält.

**6.** Verfahren nach einem oder mehreren der Ansprüche 1 bis 5, dadurch gekennzeichnet, daß die Polyurethan-Pfropfgrundlage als Endgruppen niedere Alkoxyreste und/oder Hydroxylgruppen enthält.

**7.** Verfahren nach einem oder mehreren der Ansprüche 1 bis 6, dadurch gekennzeichnet, daß endständige OH-Gruppen der Polyurethan-Pfropfgrundlage durch angelagerte Monoisocyanate maskiert oder blockiert sind.

8. Verfahren nach einem oder mehreren der 1 bis 7, dadurch gekennzeichnet, daß als aufzupfropfende Vinylestermonomere Vinylacetat und/oder Vinylpropionat, vorzugsweise Vinylacetat, verwendet werden.

9. Verfahren nach einem oder mehreren der Ansprüche 1 bis 8, dadurch gekennzeichnet, daß als aufzupfropfende Vinylestermonomere Vinylacetat und/oder Vinylpropionat und Versaticsäurevinylester verwendet werden.

10. Verfahren nach einem oder mehreren der Ansprüche 1 bis 9, dadurch gekennzeichnet, daß auf die Polyurethan-Pfropfgrundlage Polymerreste aus Vinylestern und weiteren mit den Vinylestern gegebenenfalls copolymerisierten ethylenisch ungesättigten Monomeren und/oder deren Verseifungsprodukten aufgepfropft sind.

11. Verfahren nach einem oder mehreren der Ansprüche 1 bis 10, dadurch gekennzeichnet, daß die in den auf die Polyurethan-Pfropfgrundlage aufgepfropften Polymerresten enthaltenen Vinylestereinheiten und gegebenenfalls weiteren aufgepfropften und verseifbaren ethylenisch ungesättigten Monomereinheiten teilweise oder vollständig verseift werden.

12. Verfahren nach einem oder mehreren der Ansprüche 1 bis 11, dadurch gekennzeichnet, daß die zu pfropfenden Monomeren im Gemisch mit der Pfropfgrundlage oder unter Zudosierung in die vorgelegte Pfropfgrundlage der Polymerisaation zugeführt werden.

13. Verfahren nach einem oder mehreren der Ansprüche 1 bis 12, dadurch gekennzeichnet, daß die Pfropfpolymerisation in alkoholischer Lösung durchgeführt wird.

14. Verfahren nach einem oder mehreren der Ansprüche 1 bis 13, dadurch gekennzeichnet, daß die teilweise oder vollständige Verseifung der vinylestereinheiten in den aufgepfropften Polymerresten unter Zusatz von niederen Alkoholen, gegebenenfalls in Mischung mit Wasser, und alkalischer oder gegebenenfalls saurer Katalyse bei Temperaturen unterhalb von 160 °C erfolgt.

15. Verwendung von nicht verseiften Pfropfpolymerisaten, erhalten nach einem oder mehreren der Ansprüche 1 bis 14, als Schmelzklebstoff oder in Verbindung mit Lösungsmitteln als lösungsmittelhaltige Klebstoffe für die Verklebung diverser Materialien wie Metalle, keramische Materialien, Kunststoffe, Fasern, Folien, Textilien, Papier, Holz, ferner zur Herstellung von Folien durch thermoplastische Verformung oder zur Herstellung von Beschichtungen.

16. Verwendung verseifter und/oder teilverseifter Pfropfpolymerisate, erhalten nach einem oder mehreren der Ansprüche 1 bis 14, als Klebstoff sowie als Ausgangsmaterial für Gieß-, Preß- oder Extrusionsfolien.

**Claims**

**Claims for the following Contracting States : AT, BE, CH, DE, FR, GB, LI**

1. A graft polymer with a polyurethane graft base, the graft base containing at least 2 urethane groups in the molecule and units of diisocyanates and if appropriate small amounts of monofunctional isocyanates as well as units of diols and if appropriate small amounts of monohydroxyl compounds, wherein polymer radicals of units of carboxylic acid vinyl esters with 3 to 20 carbon atoms and/or hydrolysis products thereof and if appropriate other ethylenically unsaturated and if appropriate copolymerized monomers and/or if appropriate hydrolysis products thereof are grafted onto the polyurethane graft base.

2. A graft polymer as claimed in claim 1, wherein the polyurethane graft base has a molecular weight of between 200 and 50,000 g/mol.

3. A graft polymer as claimed in either of claims 1 and 2, where in the polyurethane graft base contains units of aromatic and/or aliphatic and/or cycloaliphatic diisocyanates, preferably hexamethylene diisocyanate and/or isophorone diisocyanate units.

4. A graft polymer as claimed in any one of claims 1 to 3, wherein the polyurethane graft base contains units of alkylene glycol and/or polyalkylene glycol, preferably polyethylene glycol with a molecular

16

weight of between 200 and 10,000 g/mol, or mixtures of these units in the diol component.

5. A graft polymer as claimed in any one of claims 1 to 4, wherein the polyurethane graft base contains exclusively or partly units of low-molecular-weight diols, preferably from the group comprising butanediols, propanediols, ethylene glycol, diethylene glycol, triethylene glycol and ethylene propylene glycols, in the diol component.

6. A graft polymer as claimed in any one of claims 1 to 5, wherein the polyurethane graft base contains lower alkoxy radicals and/or hydroxyl groups as end groups.

7. A graft polymer as claimed in any one of claims 1 to 6, wherein terminal OH groups of the polyurethane graft base are masked or blocked by added-on monoisocyanates.

8. A graft polymer as claimed in any one of claims 1 to 7, wherein polymer radicals of vinyl propionate and/or vinyl acetate, preferably vinyl acetate, and/or hydrolysis products thereof, are grafted onto the polyurethane graft base in amounts of 10 to 99% by weight, based on the graft polymer.

9. A graft polymer as claimed in any one of claims 1 to 8, wherein polymer radicals of vinyl acetate and/or vinyl propionate and vinyl versatate and/or hydrolysis products thereof are grafted onto the polyurethane graft base.

10. A graft polymer as claimed in any one of claims 1 to 9, wherein polymer radicals of vinyl esters and other ethylenically unsaturated monomers, copolymerized with the vinyl esters if appropriate, and/or hydrolysis products thereof are grafted onto the graft base.

11. A graft polymer as claimed in any one of claims 1 to 10, wherein the vinyl ester units and if appropriate other grafted-on and hydrolyzable ethylenically unsaturated monomer units contained in the polymer radicals grafted onto the polyurethane graft base are partly or completely hydrolyzed.

12. A process for the preparation of graft polymers as claimed in any one of claims 1 to 11 by grafting polymerization, initiated by free radicals, of ethylenically unsaturated polymerizable monomers in solution or in bulk or if appropriate in emulsion or suspension onto a graft base and if appropriate subsequent hydrolysis of hydrolyzable monomer units in the polymer radicals grafted on, which comprises using a polyurethane as claimed in any one of claims 1 to 7 as the graft base and using as the monomers to be grafted on carboxylic acid vinyl esters with 3 to 20 carbon atoms and if appropriate other ethylenically unsaturated polymerizable monomers, which can be copolymerized if appropriate, in amounts of 10 to 99% by weight, based on the graft polymer, the monomers being subjected to free radical polymerization by mixing with the graft base and addition of free radical initiators, and if appropriate subsequently partly or completely hydrolyzing the vinyl ester units and if appropriate other hydrolyzable monomer units in the grafted-on polymer radicals of the resulting graft polymers by hydrolysis and/or alcoholysis and isolating the resulting graft polymers.

13. The process as claimed in claim 12, wherein vinyl acetate and/or vinyl propionate and if appropriate vinyl versatate is used as the vinyl ester monomer to be grafted on.

14. The process as claimed in any one of claims 12 and 13, where in the monomers to be grafted on are fed to the polymerization as a mixture with the graft base or by metering into the graft base initially introduced.

15. The process as claimed in any one of claims 12 to 14, where in the grafting polymerization is carried out in alcoholic solution.

16. The process as claimed in any one of claims 12 to 15, wherein the partial or complete hydrolysis of the vinyl ester units in the grafted-on polymer radicals is carried out under alkaline or if appropriate acid catalysis at temperatures below 160 °C with addition of lower alcohols, if appropriate mixed with water.

17. The use of a non-hydrolyzed graft polymer as claimed in any one of claims 1 to 11 as a hot melt adhesive or in association with solvents as a solvent-containing adhesive for sticking various materials,

17

such as metals, ceramic materials, plastics, fibers, films, textiles, paper and wood, and furthermore for the production of films by thermoplastic shaping or for the production of coatings.

**18.** The use of a hydrolyzed and/or partly hydrolyzed graft polymer as claimed in any one of claims 1 to 11 as an adhesive and as a starting material for cast, pressed or extruded films.

**Claims for the following Contracting State : ES**

**1.** A process for the preparation of a graft polymer with a polyurethane graft base, the graft base containing at least 2 urethane groups in the molecule and units of diisocyanates and if appropriate small amounts of monofunctional isocyanates as well as units of aliphatic and/or cycloaliphatic diols or polyalkylene glycols or polyalkylene glycols in combination with low-molecular-weight aliphatic diols and if appropriate small amounts of monohydroxy compounds, and polymer radicals of units of carboxylic acid vinyl esters with 3 to 20 carbon atoms and/or hydrolysis products thereof and if appropriate other ethylenically unsaturated and if appropriate copolymerized monomers and/or if appropriate hydrolysis products thereof being grafted onto the polyurethane graft base by grafting polymerization, initiated by free radicals, of ethylenically unsaturated polymerizable monomers in solution or in bulk or if appropriate in emulsion or suspension onto a graft base and if appropriate subsequent hydrolysis of hydrolyzable monomer units in the polymer radicals grafted on, which comprises using a polyurethane graft base as the graft base and using as the monomers to be grafted on carboxylic acid vinyl esters with 3 to 20 carbon atoms and if appropriate other ethylenically unsaturated polymerizable monomers, which can be copolymerized if appropriate, in amounts of 10 to 99% by weight, based on the graft polymer, the monomers being subjected to free radical polymerization by mixing with the graft base and addition of free radical initiators, and if appropriate subsequently partly or completely hydrolyzing the vinyl ester units and if appropriate other hydrolyzable monomer units in the grafted-on polymer radicals of the resulting graft polymers by hydrolysis and/or alcoholysis and isolating the resulting graft polymers.

**2.** A process as claimed in claim 1, wherein the polyurethane graft base has a molecular weight of between 200 and 50,000 g/mol.

**3.** A process as claimed in claim 1 and/or 2, wherein the polyurethane graft base contains units of aromatic and/or aliphatic and/or cycloaliphatic diisocyanates, preferably hexamethylene diisocyanate and/or isophorone diisocyanate units.

**4.** A process as claimed in one or more of claims 1 to 3, wherein the polyurethane graft base contains units of alkylene glycol and/or polyalkylene glycol, preferably polyethylene glycol with a molecular weight between 200 and 10,000 g/mol, or mixtures of these units in the diol component.

**5.** A process as claimed in one or more of claims 1 to 4, wherein the polyurethane graft base contains exclusively or partly units of low-molecular-weight diols, preferably from the group consisting of butanediols, propanediols, ethylene glycol, diethylene glycol, triethylene glycol or ethylene propylene glycols, in the diol component.

**6.** A process as claimed in one or more of claims 1 to 5, wherein the polyurethane graft base contains lower alkoxy radicals and/or hydroxyl groups as end groups.

**7.** A process as claimed in one or more of claims 1 to 6, wherein terminal OH groups of the polyurethane graft base are masked or blocked by added-on monoisocyanates.

**8.** A process as claimed in one or more of claims 1 to 7, wherein vinyl acetate and/or vinyl propionate, preferably vinyl acetate, are used as the vinyl ester monomers to be grafted on.

**9.** A process as claimed in one or more of claims 1 to 8, wherein vinyl acetate and/or vinyl propionate and vinyl versatate are used as the vinyl ester monomers to be grafted on.

**10.** A process as claimed in one or more of claims 1 to 9, wherein polymer radicals of vinyl esters and other ethylenically unsaturated monomers, copolymerized with the vinyl esters if appropriate, and/or

18

EP 0 308 832 B1

hydrolysis products thereof are grafted onto the polyurethane graft base.

11. A process as claimed in one or more of claims 1 to 10, wherein the vinyl ester units and if appropriate other grafted-on and hydrolyzable ethylenically unsaturated monomer units contained in the polymer radicals grafted onto the polyurethane graft base are partly or completely hydrolyzed.

12. The process as claimed in one or more of claims 1 to 11, wherein the monomers to be grafted on are fed to the polymerization as a mixture with the graft base or by metering into the graft base initially introduced.

13. The process as claimed in one or more of claims 1 to 12, wherein the grafting polymerization is carried out in alcoholic solution.

14. The process as claimed in one or more of claims 1 to 13, wherein the partial or complete hydrolysis of the vinyl ester units in the grafted-on polymer radicals is carried out under alkaline or if appropriate acid catalysis at temperatures below 160°C with addition of lower alcohols, if appropriate mixed with water.

15. The use of a non-hydrolyzed graft polymer obtained as claimed in one or more of claims 1 to 14, as a hot melt adhesive or in association with solvents as a solvent-containing adhesive for sticking various materials, such as metals, ceramic materials, plastics, fibers, films, textiles, paper and wood, and furthermore for the production of films by thermoplastic shaping or for the production of coatings.

16. The use of a hydrolyzed and/or partly hydrolyzed graft polymer obtained as claimed in one or more of claims 1 to 14, as an adhesive and as a starting material for cast, pressed or extruded films.

**Revendications**
**Revendications pour les Etats contractants suivants : AT, BE, CH, DE, FR, GB, LI**

1. Polymères greffés avec une base de greffage polyuréthanne, la base de greffage contenant au moins deux groupes uréthanne dans la molécule et des unités de di-isocyanates et éventuellement de faibles quantités d'isocyanates monofonctionnels, ainsi que des unités de diols aliphatiques et/ou cyclo-aliphatiques, ou des polyalkylène-glycols, ou des polyalkylène-glycols en combinaison avec des diols aliphatiques à bas poids moléculaire, et éventuellement de faibles quantités de composés monohydroxy, caractérisés en ce que sur la base de greffage polyuréthanne sont greffés des radicaux polymères d'unités d'esters vinyliques d'acides carboxyliques comportant de 3 à 20 atomes de carbone, et/ou de leurs produits de saponification, et éventuellement d'autres monomères à insaturation éthylènique et éventuellement copolymérisés, et/ou éventuellement leurs produits de saponification.

2. Polymères greffés selon la revendication 1 caractérisés en ce que la base de greffage polyuréthanne a un poids moléculaire compris entre 200 et 50 000 g/mole.

3. Polymères greffés selon la revendication 1 et/ou 2, caractérisés en ce que la base de greffage en polyuréthanne contient des unités de di-isocyanates aromatiques et/ou aliphatiques et/ou cycloaliphatiques, de préférence l'hexaméthylène-di-isocyanate et/ou l'isophorone-di-isocyanate.

4. Polymères greffés selon une ou plusieurs des revendications 1 à 3, caractérisés en ce que la base de greffage polyuréthanne contient dans le composant diol des unités d'alkylène-glycol et/ou polyalkylène-glycol, de préférence de polyéthylène-glycol, avec un poids moléculaire compris entre 200 et 10 000 g/mole, ou des mélanges de ces unités.

5. Polymères greffés selon une ou plusieurs des revendications 1 à 4, caractérisés en ce que la base de greffage polyuréthanne contient dans le composant diol uniquement ou partiellement des unités de diols de bas poids moléculaire, de préférence pris dans le groupe des butane-diols, propane-diols, éthylène-glycol, diéthylène-glycol, triéthylène-glycol ou éthylène-propylène-glycols.

6. Polymères greffés selon une ou plusieurs des revendications 1 à 5, caractérisés en ce que la base de greffage polyuréthanne contient en tant que groupes terminaux des radicaux alcoxy inférieurs et/ou des groupes hydroxyle.

7. Polymères greffés selon une ou plusieurs des revendications 1 à 6, caractérisés en ce que les groupes OH terminaux de la base de greffage polyuréthanne sont masqués ou bloqués par des monoisocyanates fixés par addition.

8. Polymères greffés selon une ou plusieurs des revendications 1 à 7, caractérisés en ce que sur la base de greffage poluyréthanne sont greffés des radicaux polymères de propionate de vinyle et/ou d'acétate de vinyle, de préférence d'acétate de vinyle, en quantités de 10 à 99% en poids, par rapport au polymère greffé, et/ou leurs produits de saponification.

9. Polymères greffés selon une ou plusieurs des revendications 1 à 8, caractérisés en ce que sur la base de greffage polyuréthanne sont greffés des radicaux polymères d'acétate de vinyle et/ou de propionate de vinyle et des esters vinyliques des acides versatiques et/ou leurs produits de saponification.

10. Polymères greffés selon une ou plusieurs des revendications 1 à 9, caractérisés en ce que sur la base de greffage polyuréthanne sont greffés des radicaux polymères des esters vinyliques et d'autres monomères à insaturation éthylénique éventuellement copolymérisés avec les esters vinyliques et/ou leurs produits de saponification.

11. Polymères greffés selon une ou plusieurs des revendications 1 à 10, caractérisés en ce que les unités d'esters vinyliques contenues dans les radicaux polymères greffés sur les bases de greffage polyuréthanne, et éventuellement d'autres unités monomères à insaturation éthylénique saponifiables et greffés, sont partiellement ou complètement saponifiées.

12. Procédé pour la préparation de polymères greffés selon une ou plusieurs des revendications 1 à 11, par polymérisation par greffage à amorçage radicalaire de monomères polymérisables à insaturation éthylénique, en solution ou en masse ou éventuellement en émulsion ou en suspension, sur une base de greffage et ensuite, éventuellement par saponification des unités monomères hydrolysables dans les radicaux polymères greffés, caractérisé en ce qu'on utilise en tant que base de greffage polyuréthanne selon une ou plusieurs des revendications 1 à 7, et en tant que monomères à greffer, des esters vinyliques d'acides carboxyliques comportant de 3 à 20 atomes de carbone, et éventuellement d'autres monomères polymérisables à insaturation éthylénique, qui sont éventuellement copolymérisables, en quantité de 10 à 99% en poids par rapport au polymère greffé, en polymérisant par polymérisation radicalaire les monomères en les mélangeant avec la base de greffage et en ajoutant des amorceurs radicalaires et, éventuellement ensuite, en saponifiant les unités d'esters vinyliques dans les radicaux polymères greffés des polymères greffés résultants, et éventuellement les autres unités monomères saponifiables, partiellement ou complètement par hydrolyse et/ou alcoolyse, et en isolant les polymères greffés obtenus.

13. Procédé selon la revendication 12, caractérisé en ce qu'on utilise en tant que monomères d'esters vinyliques à greffer, l'acétate de vinyle et/ou le propionate de vinyle, et éventuellement les esters vinyliques des acides versatiques.

14. Procédé selon la revendication 12 et/ou 13, caractérisé en ce que, pour la polymérisation, les monomères à greffer sont en mélange avec la base de greffage ou en ce qu'on les introduit par addition progressive dans la base de greffage pré-introduite.

15. Procédé selon une ou plusieurs des revendications 12 à 14, caractérisé en ce qu'on met en oeuvre la polymérisation par greffage en solution alcoolée.

16. Procédé selon une ou plusieurs des revendications 12 à 15, caractérisé en ce que la saponification partielle ou complète des unités d'esters vinyliques dans les radicaux polymères greffés peut se faire en ajoutant des alcools inférieurs, éventuellement en mélange avec l'eau, et par catalyse alcaline ou éventuellement acide, à des températures inférieures à 160°C.

17. Utilisation de polymères greffés non saponifiés selon une ou plusieurs des revendications 1 à 11, en tant que colle fusible, ou en association avec des solvants en tant que colle contenant des solvants,

20

pour le collage de différents matériaux comme des métaux, céramiques, matières plastiques, fibres, pellicules, textiles, papiers, bois, ainsi que pour la préparation de pellicules par moulage thermoplastique ou pour la préparation de revêtements.

18. Utilisation de polymères greffés saponifiés et/ou partiellement saponifiés selon une ou plusieurs des revendications 1 à 11, en tant que colle ainsi qu'en tant que matière de départ pour la préparation de pellicules par coulage, par compression ou par extrusion.

**Revendications pour l'Etat contractant suivant : ES**

1. Procédé pour la préparation de polymères greffés avec une base de greffage polyuréthanne, la base de greffage contenant au moins deux groupes uréthanne dans la molécule et des unités de diisocyanates et éventuellement de faibles quantités d'isocyanates monofonctionnels, ainsi que des unités de diols aliphatiques, et/ou cyclo-aliphatiques, ou des polyalkylène-glycols, ou des polyalkylène-glycols en combinaison avec des diols aliphatiques de bas poids moléculaire et éventuellement de faibles quantités de composés monohydroxy, où sur la base de greffage polyuréthanne, sont greffés des radicaux polymères d'unités d'esters vinyliques d'acides carboxyliques comportant de 3 à 20 atomes de carbone, et/ou leurs produits de saponification, et éventuellement d'autres monomères à insaturation éthylènique et éventuellement copolymérisés, et/ou éventuellement leurs produits de saponification, par polymérisation par greffage à amorçage radicalaire de monomères polymérisables à insaturation éthylénique, en solution ou en masse, ou éventuellement en émulsion ou suspension, sur une base de greffage, et éventuellement ensuite par saponification des unités monomères hydrolysables dans les radicaux polymères greffés, caractérisé en ce qu'on utilise en tant que base de greffage une base de greffage polyuréthanne, et en tant que monomères à greffer des esters vinyliques d'acides carboxyliques comportant de 3 à 20 atomes de carbone, et éventuellement d'autres monomères polymérisables à insaturation éthylénique qui sont éventuellement copolymérisables, en quantités de 10 à 99% en poids par rapport au polymère greffé, les monomères étant polymérisés par polymérisation radicalaire en les mélangeant avec la base de greffage et en ajoutant des amorceurs radicalaires, et éventuellement en saponifiant ensuite les unités d'esters vinyliques dans les radicaux polymères greffés des polymères greffés résultants, et éventuellement les autres unités monomères saponifiables partiellement ou complètement, par hydrolyse et/ou alcoolyse, et en isolant les polymères greffés obtenus.

2. Procédé selon la revendication 1, caractérisé en ce que la base de greffage polyuréthanne a un poids moléculaire compris entre 200 et 50 000 g/mole.

3. Procédé selon la revendication 1 et/ou 2, caractérisé en ce que la base de greffage polyuréthanne contient des unités de diisocyanates aromatiques et/ou aliphatiques et/ou cycloaliphatiques, de préférence des unités d'hexaméthylène-diisocyanate et/ou d'isophorone-diisocyanate.

4. Procédé selon une ou plusieurs des revendications 1 à 3, caractérisé en ce que la base de greffage polyuréthanne contient dans le composant diol des unités d'alkylène-glycol et/ou de polyalkylène-glycol, de préférence de polyéthylène-glycol d'un poids moléculaire compris entre 200 et 10 000 g/mole, ou des mélanges de ces unités.

5. Procédé selon une ou plusieurs des revendications 1 à 4, caractérisé en ce que la base de greffage polyuréthanne contient dans le composant diol uniquement ou en partie des unités diols de bas poids moléculaire, de préférence pris dans le groupe des butane-diol, propane-diol, éthylène-glycol, diéthylène-glycol, triéthylène-glycol ou éthylène-propylène-glycol.

6. Procédé selon selon une ou plusieurs des revendications 1 à 5, caractérisé en ce que la base de greffage polyuréthanne contient en tant que groupes terminaux, des radicaux alcoxy inférieurs et/ou des groupes hydroxyle.

7. Procédé selon une ou plusieurs des revendications 1 à 6, caractérisé en ce que les groupes OH terminaux de la base de greffage polyuréthanne sont masqués ou bloqués par des monoisocyanates fixés par addition.

**8.** Procédé selon une ou plusieurs des revendications 1 à 7, caractérisé en ce qu'on utilise en tant que monomères d'esters vinyliques à greffer l'acétate de vinyle et/ou le propionate de vinyle, de préférence l'acétate de vinyle.

**9.** Procédé selon une ou plusieurs des revendications 1 à 8, caractérisé en ce qu'on utilise en tant que monomères d'esters vinyliques à greffer l'acétate de vinyle et/ou le propionate de vinyle et les esters vinyliques des acides versatiques.

**10.** Procédé selon une ou plusieurs des revendications 1 à 9, caractérisé en ce qu'on greffe sur la base de greffage polyuréthanne des radicaux polymères d'esters vinyliques et d'autres monomères à insaturation éthylénique éventuellement copolymérisés avec les esters vinyliques et/ou leurs produits de saponification.

**11.** Procédé selon une ou plusieurs des revendications 1 à 10, caractérisé en ce qu'on saponifie partiellement ou complètement les unités d'esters vinyliques contenues dans les radicaux polymères greffés sur la base de greffage polyuréthanne et éventuellement d'autres unités monomères à insaturation éthylénique saponifiables et greffés.

**12.** Procédé selon une ou plusieurs des revendications 1 à 11, caractérisé en ce qu'on introduit les monomères à greffer en mélange avec la base de greffage, ou en ce qu'on les ajoute progressivement à la base de greffage, pour la polymérisation.

**13.** Procédé selon une ou plusieurs des revendications 1 à 12, caractérisé en ce qu'on met en oeuvre la polymérisation par greffage en solution alcoolée.

**14.** Procédé selon une ou plusieurs des revendications 1 à 13, caractérisé en ce qu'on effectue la saponification partielle ou complète des unités d'esters vinyliques dans les radicaux polymères greffés en ajoutant des alcools inférieurs, éventuellement en mélange avec l'eau, et par catalyse alcaline ou éventuellement acide, à des températures inférieures à 160°C.

**15.** Utilisation de polymères greffés non saponifiés obtenus selon une ou plusieurs des revendications 1 à 14, en tant que colle fusible en association avec des solvants en tant que colles contenant des solvants pour le collage de différents matériaux comme des métaux, céramiques, matières plastiques, fibres, pellicules, textiles, papiers, bois, ainsi que pour la préparation de pellicules par moulage thermoplastique ou pour la préparation de revêtements.

**16.** Utilisation de polymères greffés saponifiés et/ou partiellement saponifiés, selon une ou plusieurs des revendications 1 à 14, en tant que colle fusible ainsi qu'en tant que matière de départ pour la préparation de feuilles par coulage, par compression ou par extrusion.